# EUROPEAN PATENT APPLICATION

(11) **EP 2 166 522 A1**
(43) Date of publication of application: **24.03.2010**
(21) Application number: 09169143.6
(22) Date of filing: 01.09.2009
(51) Int. Cl.: G08B 21/06, G02F 1/13

(54) **Apparatus for illuminating a vehicle occupant with infrared light**

(30) Priority: 22.09.2008 US 284408
(71) Applicant: Delphi Technologies, Inc., Troy, Michigan 48007 (US)
(72) Inventor: Harbach, Andrew P., Kokomo, IN 46902 (US); Skiver, Steven G., Kokomo, IN 46902 (US); Edenborough, Nancy G., Noblesville, IN 46060 (US)
(74) Representative: Denton, Michael John

(57) **Abstract**

A vehicle occupant (22) is illuminated with infrared light by an apparatus including a display apparatus (20/20') illuminated with visible light for displaying information to the occupant (22) and an infrared illuminator (28) hidden behind the display apparatus (20/20') for illuminating the occupant (22) through the display apparatus (20/20'). In a preferred embodiment, the display apparatus (20/20') is a liquid crystal display (LCD) (32) mounted in the vehicle instrument panel (14) for displaying images and data to the driver (22), and infrared light emitted by the infrared illuminator (28) is transmitted through the LCD (32) to illuminate the occupant (22).

## Description

### TECHNICAL FIELD

The present invention relates to infrared illumination of a vehicle occupant, and more particularly to apparatus for unobtrusively mounting an illuminator in a vehicle instrument panel.

### BACKGROUND OF THE INVENTION

Infrared lighting is generally used in vehicle systems that produce digital images of the vehicle occupants. For example, a digital image of the vehicle driver can be analyzed to determine a direction of the driver's gaze, or to detect eye or head movement characteristic of a drowsy driver. Infrared lighting is used for these systems because it is imperceptible to the occupant, and provides consistent illumination of the occupant under various ambient lighting conditions. One of the implementation issues concerns how and where to install the illuminator and imager such that the occupant is adequately illuminated without unduly disturbing the aesthetics of the vehicle or occluding portions of the instrument panel. For example, the illuminator and imager for a driver may be mounted at the base of the instrument cluster or on a stationary portion of the steering column, but it is difficult to do so in a way that does not detract from the vehicle aesthetics or partially occlude the instrument cluster. Accordingly, what is needed is a way of illuminating an occupant with infrared light that provides adequate illumination without affecting the vehicle aesthetics or occluding the instrument panel.

### SUMMARY OF THE INVENTION

The present invention is directed to an improved apparatus for illuminating a vehicle occupant with infrared light, including a display apparatus illuminated with visible light for displaying information to the occupant and an infrared illuminator hidden from occupant view for illuminating the occupant through the display apparatus. In a preferred embodiment, the display apparatus is a liquid crystal display (LCD) mounted in the vehicle instrument panel for displaying images and data to the driver, and infrared light produced by the infrared illuminator is transmitted through the LCD to illuminate the occupant.

### BRIEF DESCRIPTION OF THE DRAWINGS

FIG. 1 depicts a vehicle occupant, instrument panel and steering wheel, and a panel-mounted display apparatus according to this invention;

FIG. 2 is a diagram of a preferred embodiment of the panel-mounted display apparatus of FIG. 1, including a panel-mounted LCD illuminated with visible light and an infrared illuminator disposed in the instrument panel behind the LCD;

FIG. 3 is a graph depicting infrared light transmissivity of the LCD of FIG. 2 for different display settings of the LCD; and

FIG. 4 is a diagram of an alternate embodiment of this invention including a panel-mounted graphic appliqué illuminated with visible light and an infrared illuminator disposed in the instrument panel behind the graphic appliqué.

### DESCRIPTION OF THE PREFERRED EMBODIMENT

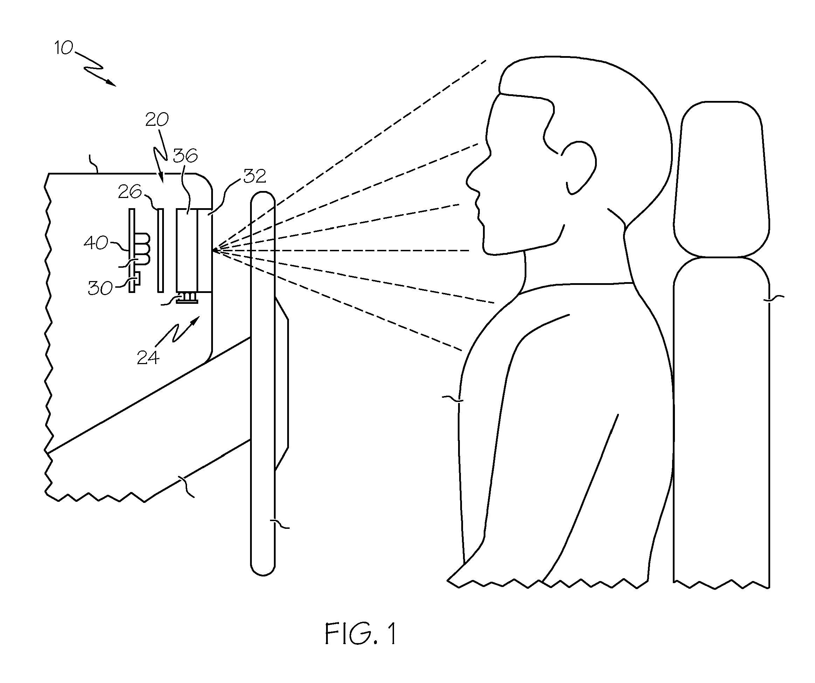

Referring to FIG. 1, the reference numeral 10 generally designates the cabin portion of a vehicle, including a seat 12, an instrument panel 14, a steering column 16 and steering wheel 18, and a display apparatus 20 mounted in the instrument panel 14 for viewing by an occupant 22 of seat 12. The occupant 22 can be the vehicle driver as shown, but the apparatus of this invention is also applicable to other vehicle occupants.

It will be understood that the illustrated vehicle is equipped with an occupant monitoring system in which the occupant 22 is illuminated with infrared light and a video imaging system responsive to the infrared light reflected from occupant 22 captures and processes video images of occupant 22. An example of such an occupant monitoring system is described in the U.S. Patent No. 7,253,739 to Hammoud et al. The monitoring system of Hammoud et al. is designed to detect driver eye closure, and includes one or more infrared LEDs for illuminating the driver's face, and a video imaging camera mounted on the steering column or in the instrument panel forward of the driver. The present invention is not directed to a driver monitoring system per se, but to infrared vision systems in general, and in particular to an apparatus for illuminating a vehicle occupant 22 with infrared light in a way that provides adequate illumination of the occupant 22 without affecting the vehicle aesthetics, occluding the instrument cluster of instrument panel 14, or taking up space on the instrument panel 14. Moreover, the apparatus of the present invention may be installed in connection with a display apparatus located in a panel other than instrument panel 14, such as in a console, or center-stack navigation or entertainment unit, or a seat back or headrest.

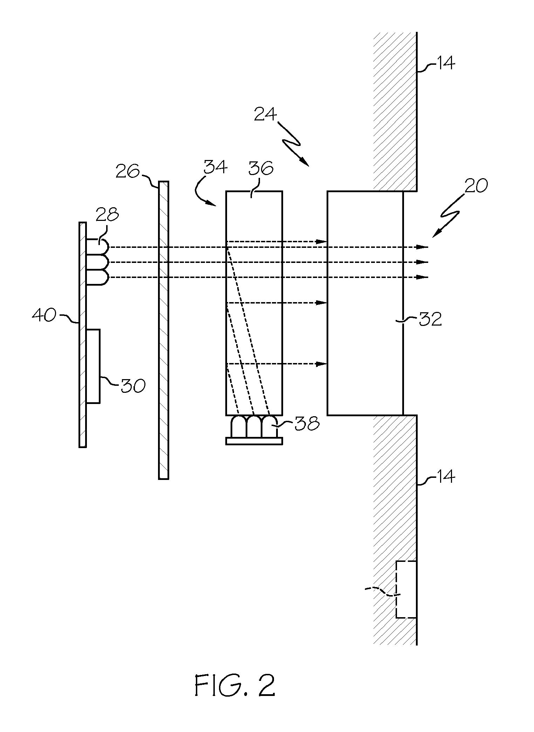

As shown more clearly in FIG. 2, the display apparatus 20 includes an LCD assembly 24, a long-pass filter 26 that transmits infrared light but reflects visible light, a set of IR LEDs 28, and optionally a digital imaging chip 30. The LCD assembly 24 comprises a color LCD 32 and a primary color lighting apparatus 34 for illuminating LCD 32 with visible light. In the illustrated embodiment, the lighting apparatus 34 comprises an acrylic lightpipe 36 that is side-lit with visible light by a set of red, blue and green LEDs 38. The lightpipe 36 diffuses the visible light emitted by LEDs 38, and projects it forward toward LCD 32 by internal reflection as illustrated in FIG. 2. Visible light emitted rearward of the lightpipe 36 is reflected forward by long-pass filter 26. Finally, the IR LEDs 28 (and optionally, the imaging chip 30) is mounted on a circuit board 40 disposed rearward of the long-pass filter 26. Infrared light emitted from the IR LEDs 28 passes through the long-pass filter 26, the light pipe 36 and the LCD 32 as indicated to illuminate the occupant 22 for imaging purposes.

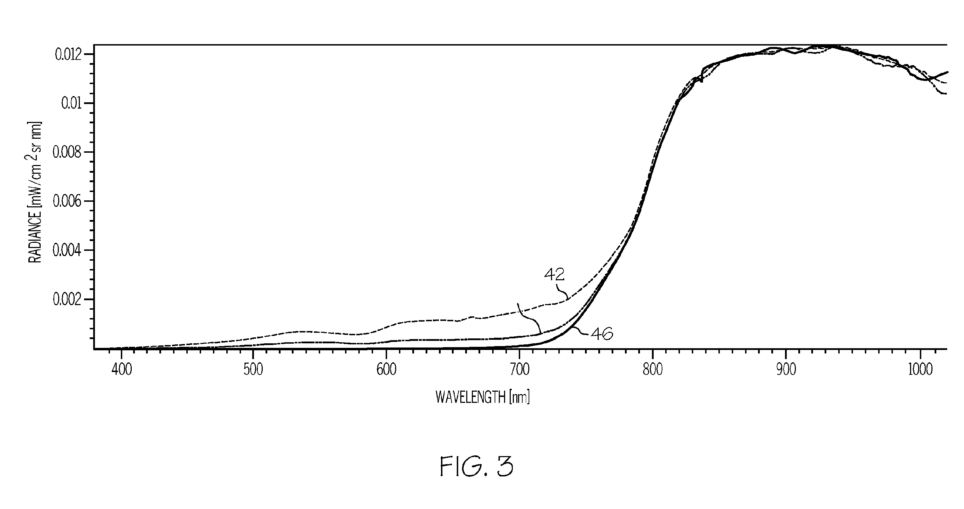

Although it would seem that the LCD 32 would not transmit infrared light very well, or that its infrared transmissivity would vary markedly depending on what is the LCD is displaying, it has been found that an LCD transmits infrared light surprisingly well, and that its infrared transmissivity is substantially independent of what the LCD is displaying. This phenomenon is graphically illustrated in FIG. 3, where traces 42, 44 and 46 depict the radiance of light transmitted through an LCD when backlit by an infrared LED as shown in FIGS. 1-2. Trace 42 represents the radiance when the LCD is off, trace 44 represents the radiance when the LCD is activated to display a solid white image, and trace 46 represents the radiance when the LCD is activated to display a solid black image. In the typical near-infrared range of 800nm - 1,000nm, there is essentially no difference in radiance, the importance of which is that the infrared light emitted by IR LEDs 28 will adequately and equivalently (evenly or consistently) illuminate occupant 22 regardless of what is displayed by LCD 32.

The imager chip 30 may be co-located with IR LEDs 28 as shown, or alternately may be separately mounted in the instrument panel 14, as indicated in phantom by the reference numeral 30'. In applications where low to medium resolution imaging is sufficient, co-locating imager chip 30 with IR LEDs 28 is practical. However, in applications where high resolution imaging is required, it has been found that it is best to mount the imager chip separately, as shown in phantom for example.

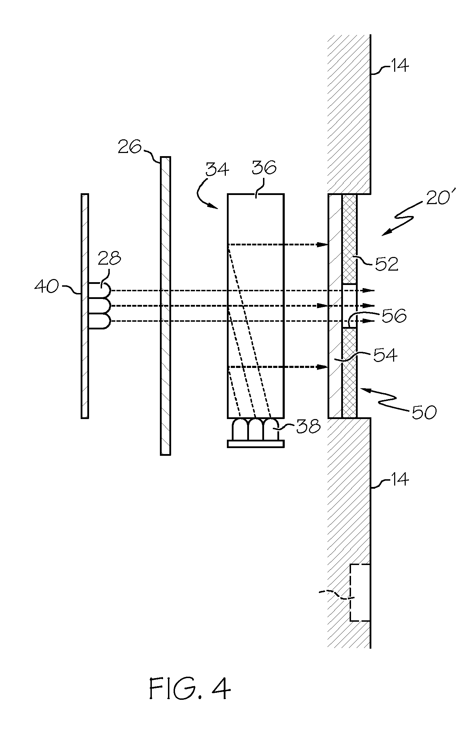

Referring to FIG. 4, the reference numeral 20' depicts an alternate display apparatus in which the LCD 32 of FIGS. 1-2 is replaced by an appliqué 50 in which an opaque coating 52 on a transparent or translucent panel 54 is selectively removed to define a window 56. The window 56 may be in the shape of a graphic symbol, or alpha-numeric character, or simply a circular or rectangular marker such as in the face of a gauge. The visible light produced by lighting apparatus 34 is transmitted through the appliqué window 56 to display the symbol, character or indicia to the occupant 22, and the infrared light produced IR LEDs 28 passes through the long-pass filter 26, the light pipe 36 and the appliqué window 56 as indicated to illuminate the occupant 22 for imaging purposes. In an alternate mechanization, the color LEDs 38 may be mounted with IR LEDs 28 on circuit board 40; this eliminates the need for lightpipe 36 and long-pass filter 26. In any case, the apparatus of the present invention may be installed in connection with an appliqué located in a panel other than instrument panel 14, such as in steering wheel 18, a console, a or center-stack navigation or entertainment unit, or a seat back or headrest, for example.

In summary, the present invention provides an improved way of illuminating a vehicle occupant with infrared light. The aesthetics of the instrument panel are unaffected by the lighting apparatus, the illumination is independent of the tilt angle of the steering column 16, and the driver's view of the instrument cluster remains unobstructed. While the present invention has been described with respect to the illustrated embodiments, it is recognized that numerous modifications and variations in addition to those mentioned herein will occur to those skilled in the art. For example, the visible lighting apparatus 34 may be different than shown, and so forth.

## Claims

1. Apparatus for illuminating a vehicle occupant (22) with infrared light, comprising:
a display apparatus (20/20') mounted in a vehicle panel (14) facing the occupant (22) and illuminated with visible light for displaying information to the occupant (22); and
an infrared illuminator (28) mounted in the panel (14) and hidden from occupant view for emitting infrared light that passes through the display apparatus (20/20') to illuminate the occupant (22).

2. The apparatus of claim 1, where:
the display apparatus (20/20') is a LCD (32).

3. The apparatus of claim 2, where:
the infrared light emitted by the infrared illuminator (28) that passes through the LCD (32) is substantially equivalent regardless of what information is being displayed by the LCD (32).

4. The apparatus of claim 1, where:
the display apparatus (20/20') is an appliqué (50).

5. The apparatus of claim 1, further comprising:
visible illumination apparatus (34) for illuminating the display apparatus (20/20') with visible light; and
a long pass filter (26) disposed between the visible illumination apparatus (34) and the infrared illuminator (28) for reflecting visible light emitted by the visible illumination apparatus (34) and passing the infrared light emitted by the infrared illuminator (28).

6. The apparatus of claim 1, further comprising:
an acrylic lightpipe (36) that is side-lit with visible light,
wherein the lightpipe (36) diffuses the visible light emitted by LEDs (38),
and projects it forward toward LCD (32) by internal reflection.

7. The apparatus of claim 1, further comprising:
a video imaging chip (30) co-located with the infrared illuminator (28) responsive to infrared light reflected from the occupant (22) and passed back through the display apparatus (20/20').
